# EUROPEAN PATENT SPECIFICATION

(11) **EP 2 364 561 B1**
(45) Date of publication and mention of the grant of the patent: **31.10.2012**
(21) Application number: 08803590.2
(22) Date of filing: 03.09.2008
(51) Int. Cl.: H04W 36/00

(54) **REDUCTION OF INTERRUPTION TIME IN A HANDOVER**
VERRINGERUNG DER UNTERBRECHUNGSZEIT BEI EINEM HANDOVER
RÉDUCTION DU TEMPS D'INTERRUPTION DANS UN TRANSFERT INTERCELLULAIRE

(43) Date of publication of application: 14.09.2011
(73) Proprietor: Nokia Siemens Networks Oy, 02610 Espoo (FI)
(72) Inventor: BRANDT, Achim von, 81929 München (DE); ZHANG, Shun, Liang, Beijing 100016 (CN); ZHANG, Yi, Beijing 100101 (CN); ZHOU, Wei, Hua, Beijing 100081 (CN)
(86) International application number: PCT/EP2008/061619
(87) International publication number: WO 2010/025765

(56) References cited:
- WO-A-2009/067637
- US-A1- 2008 161 000
- HOYMANN CHRISTIAN, GRAUER MARKUS: "WiMAX mobility support" RWTH AACHEN UNIVERISTY, [Online] October 2006 (2006-10), pages 1-6, XP002532363 Aachen, Germany Retrieved from the Internet: URL:http://fireworks.intranet.gr/Publicati ons/itgAachen06_wimaxMobility_hoymann.pdf> [retrieved on 2009-05-16]

## Description

### Technical field of the invention

The present invention relates to the technical field of communication networks. In particular the present invention relates to a Mobile Station apparatus for controlling a handover between a serving Base Station apparatus and a target Base Station apparatus, to a Base Station apparatus for controlling a connection to a Mobile Station apparatus, to a method in a Mobile Station apparatus for controlling a handover between a serving Base Station apparatus and a target Base Station apparatus, to a method in a Base Station apparatus for controlling a connection to a Mobile Station apparatus, to a MS Switching Indication message, to the use of a Handover Indication message for stopping a sending of signals in a Base Station apparatus and a computer-readable medium.

The document HOYMANN CHRISTIAN, GRAUER MARKUS: "WiMAX mobility support", RWTH AACHEN UNIVERISTY, October 2006 (2006-10), pages 1-6, Aachen, Germany, describes a handover procedures and shows that the enhanced IEEE 802.16e system has the capability to fulfill the requirements regarding the mobility management of future telecommunication systems.

The document WO 2009/067637 A (NORTEL NETWORKS LTD [CA]; BONTU CHANDRA S [CA]; KANESALINGAM PRABAHARA) 28 May 2009 (2009-05-28) describes a handover of a mobile station from a source base station to a target base station, wherein the source base station determines a delay of a connection between the source base station and the target base station.

### Background of the invention

Mobile networks may base on the concept of cellular networks, i.e. coverage may be reached by distributing base stations over an area, which base stations may cover a part of the area by a footprint generated by the base stations. The concept of a cellular network may cause that mobility handling may be difficult, since on the border of cells a handover may have to be conducted.

Handover in a cellular network may mean to cancel a connection to a serving Base Station and to establish a new connection with a target Base Station from the cell a Mobile Station (MS) is entering.

Handing over a cell may cause a lot of administrative work. For example, the context of the serving Base Station associated with the MS may have to be transferred to the target Base Station and new channels and capacity may have to be established in the new cell. Transferring the connection from the serving Base Station to the target Base Station thus may cause service interruption which may mean that in the time of handing over a connection the data transfer may not be possible.

In the IEEE (Institute of Electrical and Electronics Engineers) standard, IEEE 802.16, "Part 16: Air interface for broadband wireless access systems", P802.16 ref2/D3, February 2008, a handover process may be described.

In a document from the WiMAX™ (Worldwide Interoperability for Microwave Access) Forum, "WiMAX Network Architecture (Stage 3: Detailed protocols and procedures )", Release 1, version 1.2, January 11, 2008, ASN (Access Serving Network) anchored mobility and CSN (Connectivity Serving Network) anchored mobility management may be described.

There may exist a need to provide a more efficient handover in a communication network.

### Summary of the invention

The invention is carried out in a mobile station according to claim 1, in a base station according to claim 10 and in a method according to claim 14.

Exemplary embodiments of the present invention will be described in the following with reference to the following drawings.

### Brief description of the drawings

Fig. 1 shows a message flow diagram for preparing a handover for a better understanding of the present invention.
Fig. 2 shows a message flow diagram showing transmitting of sending a Switching Indication message according to an exemplary embodiment of the present invention.
Fig. 3 shows a block diagram of a Mobile Station apparatus according to an exemplary embodiment of the present invention.
Fig. 4 shows a block diagram of a Base Station apparatus according to an exemplary embodiment of the present invention.

### Detailed description

In an example a Mobile Station apparatus for controlling a handover between a serving Base Station apparatus and a target Base Station apparatus, a Base Station apparatus for controlling a connection to a Mobile Station apparatus, a method in a Mobile Station apparatus for controlling a handover between a serving Base Station apparatus and a target Base Station apparatus, a method in a Base Station apparatus for controlling a connection to a Mobile Station apparatus, a MS Switching Indication message, a use of a Handover Indication message and a computer-readable medium may be provided.

According to an exemplary embodiment of the present invention, a Mobile Station apparatus for controlling a handover between a Serving Base Station apparatus and a Target Base Station apparatus may be provided. The Mobile Station apparatus may comprise a Handover Message Receiving device, a Processing device, a Handover device and a Timer device.

In an example, the Handover Message receiving device may be adapted to detect receiving of a Handover Message, and the processing device may be adapted to calculate a Connection Hold Time value upon detecting of the Handover Message.

The Handover device may be further adapted to send a Handover Indication message to the Serving Base Station apparatus, in order to start the Timer device with the Connection Hold Time value and to handover the connection from the Serving Base Station apparatus to the Target Base Station apparatus upon expiring of the timer device.

According to another exemplary embodiment of the present invention, a Base Station apparatus for controlling a connection to a Mobile Station apparatus may be provided. In an example the connection to the Mobile Station apparatus may be a connection between the Base Station apparatus and the Mobile Station apparatus.

The connection may be a connection in a mobile network or in a wireless network and the connection may use a wireless link.

The Base Station apparatus may comprise a Handover Indication Receiving device and a Connection device. The Handover Indication Receiving device may be adapted to detect receiving of a Handover Indication message in the Base Station. The Connection device may be adapted to maintain an established connection until a trigger signal may appear and upon appearing of the trigger signal to stop sending of signals or messages.

According to another exemplary embodiment of the present invention, a method in a Mobile Station apparatus may be provided for controlling a handover of a connection between a serving Base Station apparatus and a Target Base Station apparatus. The method may comprise detecting receiving of a Handover message, calculating a Connection Hold Time value upon detecting receiving of the Handover message and sending a Handover indication message to the serving Base Station apparatus.

The method in a further example may also comprise starting a Timer device with the calculated Connection Hold Time value and handing over the connection with the serving Base Station apparatus to the target Base Station apparatus upon expiring of the Timer device.

According to another exemplary embodiment of the present invention, a method in a Base Station apparatus for controlling a connection to a Mobile Station apparatus may be provided. The method may comprise detecting the receiving of a Handover Indication message, maintaining an established connection until a trigger signal may appear and stopping sending of a signal upon appearing of the trigger signal. A signal may comprise a message.

According to another exemplary embodiment of the present invention, a Switching Indication message, e.g. a MS Switching Indication message, may be provided. In an example the Switching Indication message may be received by a base station apparatus. The base Station may process the received Switching Indication message. The Switch Indication message, in particular a pattern within the Switch Indication message may be adapted such, that when being interpreted or processed by the Base Station apparatus the Switch Indication message may control the Base Station apparatus such, that the Base Station apparatus may stop sending of signals to a MS.

In an example receiving the Switch Indication message may switch the Base Station apparatus from a sending operational mode in an operational mode, in which operational mode the Base Station apparatus may stop sending of substantially any signals.

In an example the Switch Indication message may comprise a Management message type field for identifying the type of the message.

In another example the Switch Indication message may comprise a MS Switch Flag field, which flag, when set to a predefined value may be adapted to indicate to a Base Station, e.g. a Serving Base Station, that a Mobile Station apparatus may try to switch a connection to a Target Base Station.

In particular, the combination and/or the order of receiving the Management message type field and the MS Switch Flag may form a pattern and signal to the Base Station the desired information.

In other words, in order to differentiate the Switch Indication message from other messages, which may be sent and received by a Base Station apparatus, the Switch Indication message, e.g. the MS Switch Indication message, may be marked by a predefined pattern. Such a pattern may be generated by using the MS Switch Flag and the Management message type field and in particular by values thereof. Thus, receiving a message having a predefined pattern structure may allow the Base Station apparatus to recognize that the Base Station apparatus may have to stop sending of signals or messages.

In an example, the MS Switch Indication message may be a signal sequence. This may indicate to the Base Station to stop sending of signals to the Mobile Station apparatus.

According to another exemplary embodiment of the present invention, a use of a Handover Indication message for stopping sending of signals in a Base Station apparatus may be provided.

According to yet another exemplary embodiment of the present invention, a computer-readable medium may be provided, comprising a program code, which when being executed by a processor may carry out at least one method of the method for controlling a handover between a serving Base Station apparatus and a target Base Station apparatus and the method in a Base Station apparatus for controlling a connection to a Mobile Station apparatus.

A computer-readable medium may be a floppy disk, a hard disk, an USB (Universal Serial Bus) storage device, a RAM (Random Access Memory), a ROM (read only memory) and an EPROM (Erasable Programmable Read Only Memory). A computer readable medium may also be a data communication network, e.g. the Internet, which may allow downloading a program code.

In another exemplary embodiment of the present invention a program element may be provided, which when being executed by a processor may carry out at least one method of the method for controlling a handover between a serving Base Station apparatus and a target Base Station apparatus and the method in a Base Station apparatus for controlling a connection to a Mobile Station apparatus.

A handover may be initiated by a Base Station apparatus or by a Mobile Station apparatus. A Base Station initiated handover may be initiated by the Base Station apparatus. A Mobile Station initiated handover may be initiated by a Mobile Station apparatus.

For initiating a handover a Handover message, for example a Handover Response message or a Handover Request message may be exchanged between a Mobile Station apparatus (MS) and a Base Station apparatus (BS), in particular a Serving Base Station apparatus (S-BS). In such a Handover message, a Base Station may inform the Mobile Station about the time when a target Base Station may be ready to receive the Mobile Station. In this context, receiving a Mobile Station may mean to accept a connection with a Mobile Station. The Target Base Station (T-BS), i.e. the receiving Base Station, may accelerate the handover of a Mobile Station apparatus by sending a signal which shows the Mobile Station that the T-BS may allow fast ranging.

The Source Base Station or the Serving Base Station may estimate when a fast ranging handover for the Mobile Station (MS) may be conducted. The estimation for the beginning of a fast ranging handover may base on the information, such as Target Base Station capability for allocating fast ranging opportunity for this MS and may base on a backhaul signal transmission delay.

In one example, the Mobile Station may switch to the Target Base Station quickly after the MS may send a Handover indication message to the Source Base Station.

In another example the time when fast ranging may start may be delayed, such that the time, when fast ranging may be conducted may be very late. Conducting fast ranging very late may be possible since the time when the Mobile Station may switch to the Target Base Station may be late due to a very large backhaul signal transmission delay.

A signal comprising a message may be an electromagnetic signal.

Thus, the MS may accept a large buffer time, delay time or dead time in order to meet the right timing of the receiving Base Station apparatus.

In order to prevent dead times, i.e. time which may not be used for sending user information or payload data, the buffer time may be reduced. The dead time may be a time period during which time period sending of payload data may be interrupted whereas this time period may could be used for sending pay load data.

In other words, the MS may use a backhaul signal transmission delay in order to keep a connection with the Source BS and keep a transmission, while a signal is travelling through the backhaul network to the Target BS.

In an example the MS and the S-BS may be synchronized such, that sending of data may only be stopped in a late phase of a handover process. This synchronization between MS and S-BS may base on a timer and a signal exchange.

Expiring of a timer may be loading a Timer device with a predefined value and counting the value with predefined clock periods back to zero, wherein when the counter reaches zero, a trigger signal may be provided. In another example, the timer may start from a first predefined value and counts to a second predefined value and when the second predefined value may be reached, the timer may send a trigger signal.

According to another exemplary embodiment of the present invention, in the Mobile Station apparatus the handover message may be at least one Handover message of a Handover Response message and a Handover Request message. The type of message may depend whether the Mobile Station apparatus or the Base Station apparatus may have initiated the handover.

A Handover Response message may be used in a Mobile Station initiated handover process, whereas a Handover Request message may be used in a BS initiated handover process.

In IEEE 802.16 as an example the Handover Response message may be a MOB_BSHO-RSP message and a Handover Request maybe a MOB_BSHO-REQ message.

The Handover Response message and the Handover Request message may be exchanged between MS and S-BS via an air interface and/or on layer 2 of a network model.

According to another exemplary embodiment of the present invention, the Connection Hold Time value may be calculated substantially from an action time value, a Handover Indication readiness timer value and a Base Station switching timer value. In an example the action time value may be reduced or subtracted by a Handover Indication readiness timer value and the action time value may further be reduced or subtracted by the Base Station Switching Time value.

A Handover Indication readiness timer may be the time after transmitting a MOB_BSHO-REQ signal, a message or a MOB-BSHO-RSP message to prepare the serving BS to enable the MS to transmit a Handover Indication message, e.g. MOB_HO-IND.

The BS switching timer may be the minimum time which the MS may require between transmission of a MOB_HO-IND message to the serving BS, until the MS may be able to receive Fast_Ranging_IE at the target BS.

The BS Switching Time interval or the BS Switching Timer may be delayed by a time period, during which the S-BS may keep sending information to the MS. Then the BS Switching Timer may be may be independent of sending a handover indication message.

The action time may be an estimation made by the S-BS about a time until which the target Base Station may be ready to conduct a fast ranging.

A time may be measured in number of frames. Therefore, the action time may also be a number of frames after which number of frames the S-BS may send a handover message to the MS.

Taking the action time, the Handover Indication readiness timer and the BS switching timer as a basis for a buffer time calculation, may allow to determine a part or a portion of the action time, which portion may be used for keeping a connection with the base station and for elongate a connection up-time.

This portion, in an example, may be calculated by subtracting a Handover Indication Readiness Timer value and a BS Switching Timer value from an Action Time value. During this calculated portion the MS may not be occupied with preparation work or administrative work. Administrative work may be conducted during the time period determined by the Indication Readiness Timer and / or by the BS Switching timer.

The timer values may be values measured in the unity frames.

In other words, considering the Action Time Value, the Handover Indication Readiness Timer and the BS Switching Timer may allow to calculate a time from which time on the MS may be able to switch to a T-BS. Furthermore, this time period may indicate how long a connection between MS and S-BS may be maintained. In a MS an order of timers or of time intervals may be rearranged. In an example the order may be rearranged, when a Handover Indication Readiness Timer and a BS Switching timer may appear in a MS.

The calculated time period may be varied or reduced such, that a handover may be initiated in a late stage of this "free" time. In other words, the handover may be initiated as late as possible during the calculated portion. Thus, the handover from MS to T-BS may be postponed.

According to another exemplary embodiment of the present invention, the Handover device may be further adapted to send a Switch Indication message to the serving Base Station apparatus, wherein the Switch Indication message may indicate a handover of the Mobile Station apparatus to the target Base Station apparatus.

A Mobile Station may signal with a Switch Indication message to the serving Base Station apparatus a point in time at which point in time the Mobile Station may leave a connection with the S-BS.

According to another exemplary embodiment of the present invention, the Switch Indication message may be at least one message of a MS Switch Indication message and a Handover Indication message.

The Switch Indication message or a Switch Indication signal comprising a switch indication message may be used to transport the information that a MS may stop a connection with the S-BS. Thus receiving a Switch Indication message may allow the S-BS to stop sending of information.

The MS Switch Indication message may be a signal implemented or generated such, that the S-BS may be able to identify the MS Switch Indication message and to stop a transmission.

A Handover Indication message may be a known message, however receiving this message a plurality of times, without sending a own message may signal to the S-BS that a Switching Indication message may have been sent from the Mobile Station apparatus. Thus, receiving a further Handover Indication message, e.g. a second MOB_HO-IND message, may signal to the S-BS that the MS may have sent a Switching Indication message.

In another example an existing Handover Indication message, e.g. a MOB_HO-IND may be modified, such that the modified message may be identified as a Switching Indication message. An example for modifying an existing message may be adding a MS switch flag into the message. Appearing of the flag then may mean that the MS may switch to the T-BS.

According to another exemplary embodiment of the present invention, the Connection Hold Time value may be reduced by a time value taking into account a time duration for sending the Switch Indication message.

Since trigger signals may be transported via an air interface a certain propagation delay for the signal may be taken into account before a timer may be started with a timer value from a message.

In a case when the MS may calculate a timer value and may send the timer value to the S-BS , a signal may be sent over an air interface from the MS to the S-BS. The travelling time for the signal may be taken into consideration in order to result in the same time basis on the MS side and the S-BS side, i.e. that the MS and the S-BS may substantially be synchronous.

According to another exemplary embodiment of the present invention, the Handover message receiving device may be further adapted to receive an enable signal, wherein the enable signal may be adapted to enable in the Mobile Station apparatus sending of the Switch Indication message.

The S-BS may send the enable signal to the MS in order to signal to the MS that the S-BS may expect to receive a signal or a message, i.e. a Switch Indication message, from the MS to be informed when the S-BS shall stop sending. If the S-BS may not send an enable signal, the MS may not provide a Switch Indication message.

According to another exemplary embodiment of the present invention, the Handover Message receiving device may be adapted to receive the enable signal from the serving Base Station apparatus.

Thus, the Base Station apparatus may inform the MS that the Base Station apparatus may expect to receive the Switch Indication message from the MS.

According to another exemplary embodiment of the present invention, the Mobile Station apparatus may be a Mobile Station based on at least one of the WiMAX^{™}, standard the IEEE 802.16 standard and the IEEE 802.16e standard.

According to another exemplary embodiment of the present invention, the trigger signal in the Base Station apparatus may be at least one trigger signal of the group of trigger signals consisting of receiving a MS Switch Indication message from a Mobile Station apparatus, receiving a Handover Indication message from a Mobile Station apparatus and receiving a timer trigger signal from the Base Station apparatus.

The timer trigger signal from the Base Station apparatus may be a trigger signal generated by expiring of a timer within the Base Station itself. Receiving a MS Switching Indication message or receiving a Handover Indication message from a Mobile Station apparatus may be receiving a trigger signal from an external source.

The MS Switching Indication message and/or a Handover Indication message may be Switching Indication messages or Switch indication messages received from extern, e.g. from the MS. The timer trigger signal may be an internal trigger signal.

Generally a message may be transported by a signal, e.g. by an electro-magnetic signal. The message may describe the information transported by the signal.

Other sources than a Mobile Station for providing the trigger signal may be possible.

According to another exemplary embodiment of the present invention, the Base Station apparatus may further comprise a Timer device and a Processing device.

In an example the processing device may be adapted, upon receiving of a Handover Indication message to calculate a Connection Hold Time value.

The connection device may further be adapted to start the Timer device with the Connection Hold Time value. In other words, the timer device may use the Connection Hold Time value as a timer value. Upon expiring of this value, a trigger signal may be generated.

In an example, the Connection Hold Time value calculated in the Base Station apparatus may be substantially equal to the Connection Hold Time value calculated in the Mobile Station apparatus. Thus, the Mobile Station apparatus and the Base Station apparatus may be synchronized.

Upon expiring of the Timer device, i.e. upon expiring of the Connection Hold Timer the Base Station apparatus, in particular the Connection device, may send a timer trigger signal.

The timer trigger signal may be the timer trigger signal which also may be received from the Base Station and upon receiving of the timer trigger signal the Base Station may stop sending of signals, messages or information. Thus, a data connection between the MS and the S-BS may be interrupted.

According to another exemplary embodiment of the present invention, the Processing device may be further adapted to take into account during calculating of the Connection Hold Time value a propagation delay for a Handover message such that the timer device may be synchronous with the timer device of a Mobile Station apparatus.

If the Mobile Station apparatus and the Base Station apparatus may use the same timer value, the Base Station apparatus may not need an external trigger signal from the Mobile Station apparatus. The internal trigger signal may be the trigger signal which may be sent by the Base Station itself after expiring of the Connection Hold Time value timer.

According to another exemplary embodiment of the present invention, the connection device may be adapted to send an enable signal to a Mobile Station apparatus, wherein the enable signal may be adapted to enable the sending of the Switch Indication message and/or the trigger signal.

Thus, the Base Station apparatus may control the Mobile Station and may signal to the Mobile Station apparatus that the Base Station apparatus may require a Switch Indication message for stopping sending of signals.

According to yet another exemplary embodiment of the present invention, the MS Switch Indication message may comprise a management message type field for identifying a type of the message, and may comprise a MS Switch flag for identifying that a Mobile Station apparatus may be trying to switch to the target Base Station.

In one example, the MS Switch Indication message may only comprise the management message type field and the MS switch flag. In another example, the MS Switch Indication message may only comprise the management message type field.

Receiving a message with the management message type field identifying a MS Switch Indication message and the indication that the Mobile Station apparatus may be trying to switch to the target Base Station may allow to signal to a S-BS that the S-BS may stop sending of substantially any signal.

It has also to be noted that exemplary embodiments of the present invention and aspects of the invention have been described with reference to different subject-matters. In particular, some embodiments have been described with reference to apparatus type claims whereas other embodiments have been described with reference to method type claims. However, a person skilled in the art will gather from the above and the following description that unless other notified in addition to any combination between features belonging to one type of subject-matter also any combination between features relating to different subject-matters in particular between features of the apparatus claims and the features of the method claims may be considered to be disclosed with this application.

These and other aspects of the present invention will became apparent from and elucidated with reference to the embodiments described hereinafter.

The illustration in the drawings is schematic. In different drawings, similar or identical elements are provided with the same or similar reference numerals.

In the following description of the figures the value ActionTime_a is used to denote the action time transmitted on an air interface and the value ActionTime_b is used to denote the action time transmitted on a backhaul. A backhaul in this context may mean a backbone connection between a serving Base Station and a target Base Station.

A target BS or T-BS may allocate dedicated transmission opportunity for receiving a RNG-REQ (Range Request) message for one handover MS in order to allow an optimized handover. Through, the dedicated transmission opportunity a MS may not need to contend the UL (uplink) ranging opportunities. The UL (uplink) contended ranging opportunities may take longer than the dedicated transmission opportunity.

The transmission opportunity for RNG-REQ message is given in a Fast_Ranging_IE (Fast Ranging Information Element) which may be enclosed in a UL-MAP message. UL-MAP (uplink map) may be a management message according to IEEE 802.16e, which may allocate access to the UL channel.

The ActionTime_a denotes the number of air frames before a MS or Mobile Station can receive Fast Ranging IE starting from the MS receiving a MOB_BSHO_REQ message (Mobility BS Handover Request message) or a MOB_BSHO_RSP message (Mobility BS Handover Response message).

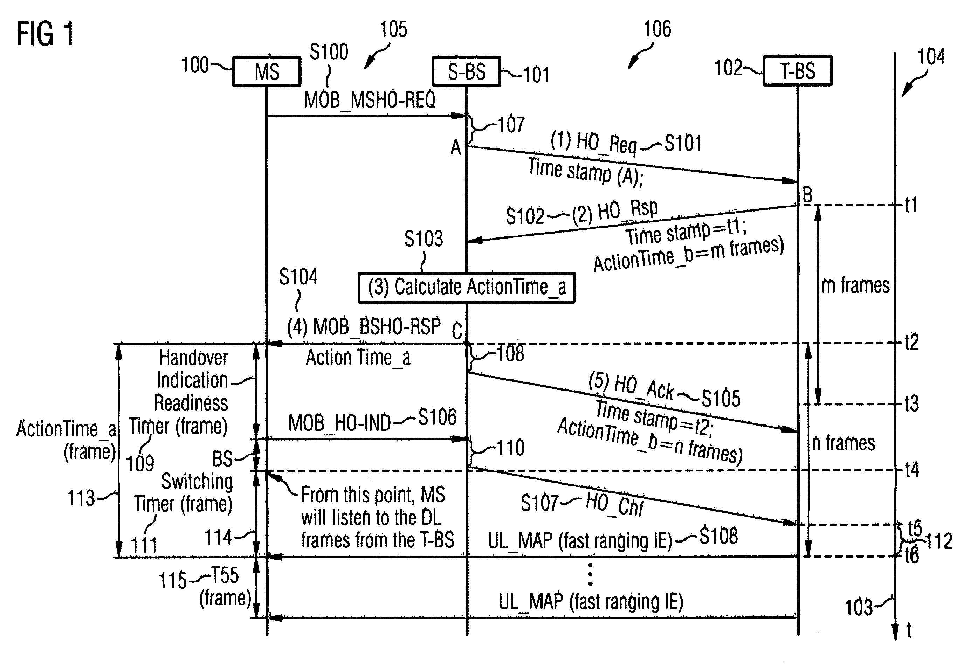

Fig. 1 shows a handover procedure for a better understanding of the present invention.

Generally in Fig. 1 the handover process is shown as a message flow diagram 104. The location of a MS 100, of a S-BS 101 and a T-BS 102 is indicated by lines and messages which are exchanged there between are indicated by arrows. Furthermore, Fig. 1 shows the time line 103, which indicates the direction of increasing time values.

Between MS 100 and S-BS 101 the air interface 105 is established, which bases on the IEEE 802.16 standard.

Between the S-BS 101 and the T-BS 102 as the backhaul protocol 106 a WiMAX^{™} protocol is used

Because backhaul transmissions 106, i.e. transmissions between S-BS 101 and T-BS 102 have a large propagation delay or a large delay in Fig. 1 messages transmitted in the backhaul 106 are shown as oblique lines or angular lines. The delay in the backhaul 106 may be considered when the ActionTime_a and the ActionTime_b be computed or calculated. The oblique lines may indicate the transmission delay between two network nodes.

In Fig. 1 a MS initiated handover is shown and thus, in step S100 a MOB_MSHO-REQ message is sent from the MS 100 to the S-BS 101. After a processing time 107 at time point A as indicated by step S101, a HO_Req comprising the time stamp value (A) is sent to the T-BS 102. The time stamp value A is the time value at which time the HO_Req (Handover Request) message is sent to T-BS.

After a processing time at time point B or at the time point t1 the T-BS 102 responds in step S102 with a HO_Rsp (Handover Response) message comprising the time stamp value t1 and an ActionTime_b value of m frames. The ActionTime_b value may indicate that with the beginning from t1 after m frames at the time t3 the T-BS 102 will be ready to send Fast_Ranging_IE to the MS.

In other words, the value of ActionTime_a and final ActionTime_b is calculated or decided by the S-BS. This calculation substantially may be based on the earliest time, when T-BS will be able to send a Fast_Ranging_IE to the MS 100, i.e. t3. t3 may appear m frames after t1. In other words, the T-BS 102 may indicate that the T-BS 102 needs m frames to come to an operational mode in which the T-BS 102 is able to send Fast_Ranging_IE to the MS and to support a fast handover process. A fast handover may prevent to contend the UL ranging opportunities.

After receiving the time stamp value t1 and the ActionTime_B value in the S-BS 101, the S-BS 101 in step S103 calculates the air action time value ActionTime_a.

This calculation may be finished at time point C corresponding to time point t2.

Thus, at time point t2 in step S104 the MOB_BSHO-RSP message is sent from the S-BS 101 to the MS 100 comprising the ActionTime_a value. The ActionTima_a value may correspond on the air interface 105 to the ActionTime b value on the backhaul side 102, 106.

After the processing time 108 the S-BS 101 sends in step S105 a HO_Ack (Handover Acknowledge) message to the T-BS 102. The HO_Ack message comprises the time stamp value t2.

Time stamp value t2 is the time value when in step S104 the MOB_BSHO-RSP message was sent to the MS 100. The ActionTime_b value now has a value of n frames, which may corresponds to the time, when T-BS shall start sending Fast Ranging IEs (UL_MAP (fast ranging IE)). This may take into consideration when the MS after the ActionTime_a 113 will be ready for receiving Fast Ranging IEs. The T-BS may not send Fast Ranging IE before expiring of ActionTime_a.

Thus, a new ActionTime_b value is sent to T-BS 102, which takes into account the calculations concerning the ActionTime_a on the air interface. I.e. the action time on the backhaul side may be corrected.

The ActionTime value b which is sent from the S-BS 101 to the T-BS 102 is the ActionTime_a value and takes also into account the backhaul transmission time. In other words, the ActionTime_b value is calculated such that the ActionTime_a on the MS 100 side appears at the same time t6 as the ActionTime_b, which is n frames from t2. Therefore, at time t6 MS 100 may be ready to receive Fast Ranging IEs and T-BS 102 may be ready to send Fast Ranging IEs.

Thus, for calculating ActionTime_a and ActionTime_b some aspects concerning minimum values have to be considered. The calculation of ActionTime_a and ActionTime_b substantially base on the fact that the earliest time the T-BS 102 can send a Fast_Ranging_IE to the MS 100 is t3, which is m frames from time t1. The value "m" is totally determined by T-BS, i.e. the value "m" is the earliest time T-BS can send fast-ranging_IE. But the value "n" is determined substantially by t3, t4 and t5. In other words, ActionTime_a and/or ActionTime_b are determined substantially by t3, t4 and t5.

Furthermore, the earliest time the MS 100 can switch to T-BS 102 is time t4. This takes into consideration that after receiving the MOB_BSHO-RSP with ActionTime_a the Handover Indication readiness timer 109 calculated in frames on the MS side 100 has to be taken into consideration.

After expiring of the Handover Indication Readiness Timer 109 in step S106 the MOB_HO-IND signal can be sent from the MS to the S-BS.

After receiving the MOB_HO-IND signal, which is a Handover Indication signal and after the processing time 110 a HO_Cnf confirmation signal is sent in step S107 to T-BS 102, which receives T-BS 102 at time t5.

Furthermore, for the calculation of time t4 the BS Switching Timer 111 on MS side is taken into consideration.

In other words, time point t4 indicates the time when a Handover Indication Readiness Timer 109, calculated in frames, and a BS Switching Timer 108, calculated in frames, have been expired. T5 considers a propagation delay for a HO_Cnf message.

The Handover Indication Readiness Timer 109 is a negotiated parameter between MS 100 and S-BS 101 to denote the time MS can send MOB_HO-IND.

The BS switching timer 111 is the minimum time the MS 100 requires between transmission of MOB_HO-IND message to the serving BS 101, and until MS 100 is able to receive Fast_Ranging_IE from the target BS.

From time point t4 the MS 100 will switch into a listen mode and MS 100 will listen to the DL (downlink) frames from the T-BS 102. In other words, beginning at time t4 a connection between MS 100 and S-BS 101 will be stopped and MS 100 is preparing and waiting for a connection to T-BS 102.

However, the estimated time at which T-BS 102 at earliest can start sending the Fast_Ranging_IE for the connection with MS 100, is the time t5, when the HO_Cnf message has been received in T-BS 102.

Thus, the time between t4 and t5 may not be used for data transmission between MS and T-BS 101.

The time t5 is estimated by S-BS 101.

The ActionTime_b value, e.g. n frames, means that after n frames from t2 the T-BS 102 will be able be send Fast_Ranging_IE. Thus, the ActionTime_b value may indicate the earliest time when MS 100 can switch to T-BS 102.

When S-BS 101 calculates the time for t5, i.e. the S-BS calculates the ActionTime_b of n frames, the S-BS 101 bases this calculation on a previous knowledge of the S-BS 101 about the backhaul signalling transmission time between S-BS 101 and T-BS 102. The estimation about the backhaul transmission time may have to be made earlier.

In order to execute a quick handover and to substantially guarantee that the MS 100 can receive Fast_Ranging_IE with a high probability, the time t6 may be calculated such, that time t6 is set to a value which is as early as possible but not earlier than any time value of t3, t4 and t5. Thus, ActionTime_a and ActionTime_b are estimated values based on signalling transmission time and based on estimations made in S-BS 101 but may not reflect accurate values. Therefore, in order to be sure that the MS can receive Fast_Ranging_IE with a high probability some additional buffer time or dead time may be added.

For example, a buffer may exist between t5 and t6. In other words, S-BS 101 calculates at time point C the ActionTime_a as well as the :ActionTime_b. By calculating ActionTime_a and ActionTime_b, S-BS 101 takes into consideration some minimum values which have to be respected, i.e. time t6 may not be earlier than any of t3, t4 and t5. However, to be sure that with a high probability the MS will receive Fast_Ranging_IE from T-BS 102 at time point t5, the buffer 112 between the earliest possible time, at which T-BS 102 could send Fast_Ranging_IEs, and t6 is taken into consideration, wherein in t6 T-BS 102 actually sends Fast_Ranging_IEs.

This also determines the ActionTime_a 113 however on MS side therefore at that time 114 arises since from time t4 on the MS 100 starts listening and waiting for Fast_Ranging_IEs which only arrive at earliest at t6.

At time point t6 or n frames after t2, in step S108, the T-BS 102 starts sending Fast_Ranging_IEs.

The timer T55 115 determines a time window during which the T-BS 102 will send Fast_Ranging_IE and during which the MS 100 has the possibility to initiate a fast handover.

Because the backhaul signal transmission delay may be very large, t6 may be much later than t4. t4 is the time when MS 100 starts listening and waiting for the Fast_Ranging_IE.

After the MS 100 sends MOB_HO-IND in step S106 to S-BS 101, the MS 100 will switch to T-BS 102 and wait for the Fast_Ranging_IE at time t4. Thus, MS 100 has to wait for a long time for the Fast_Ranging_IE after the MS 100 switches to T-BS 102 i.e. after MS switches in a listen mode.

However, at least the signal propagation time for the HO_Cnf signal may be used in order to delay the switch into the listen mode of MS 100.

The early switching to T-BS 102 may cause a long service interruption time if there is an ongoing service or a connection between the MS and the S-BS 101 while the handover takes place.

In other words, the preparation for receiving a Fast_Ranging_IE causes that during the time window 114 a connection between MS and T-BS 101 will be interrupted since at time t4 the MS switches to T-BS. The MS 100 however, may at earliest can expect receiving fast_ranging_IE at time t5.

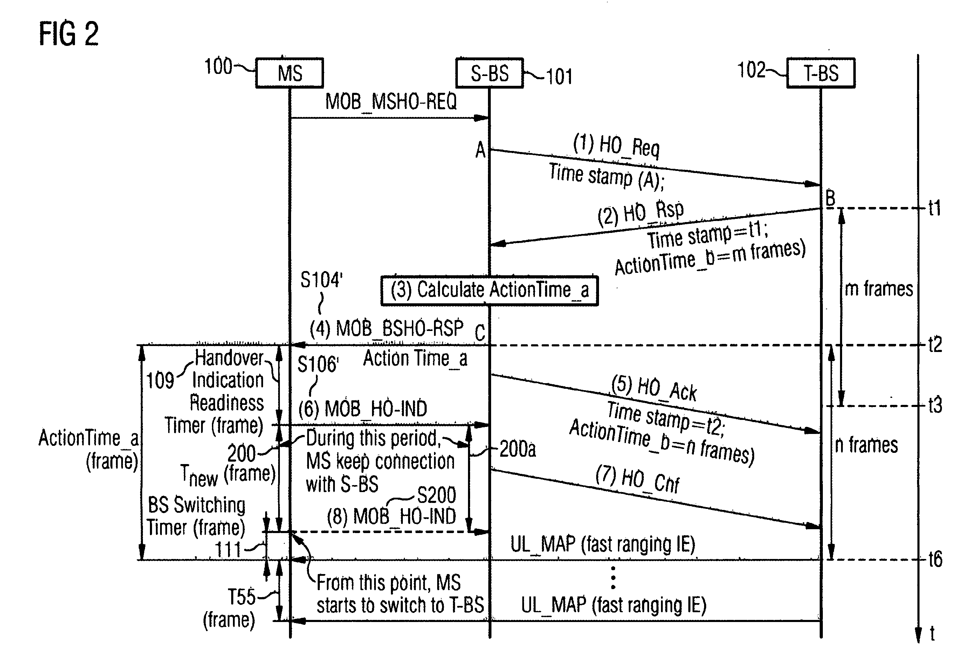

In Fig. 2 a mechanism may be shown, which may be used to reduce a service interruption time during a handover process. Steps, which have already described in Fig. 1 are not described any more but may also exist in Fig. 2.

In one exemplary embodiment of the present invention, a timer may be used on MS side and on BS side. This timer, i.e. the Connection Hold Timer 200 extends the time during which the MS and/or the S-BS 101 maintain an existing connection before switching into a listening mode, waiting for Fast_Ranging_IEs. The Connection Hold Timer 200 may help utilizing a propagation time for information exchange.

Thus, as shown in Fig. 2 after sending the MOB_HC-IND signal in step S106' (in Fig. 2 steps which are similar to steps of Fig. 1 may be indicated by similar reference numbers) the Connection Hold Timer T_{new} 200 is started.

During a time period 200 defined by the Connection Hold Time value the MS 100 maintains or keeps an existing connection with S-BS 101. The same Connection Hold timer 200a may be used on S-BS side.

The Connection Hold Time period 200 is arranged between the Handover Indication Readiness Timer 109 and the BS Switching Timer 111.

Instead of using a timer on S-BS side, after expiring of the Connection Hold Timer 200 on MS side, a Switch Indication message can be sent to the S-BS 101 in step S200. After sending the Switch Indication message the BS switching timer 111 will be started.

Therefore, the time between expiring of a Handover Indication Readiness Timer 109 and starting of the BS Switching Timer 111 can be used for exchanging information, signals or data between MS 100 and S-BS 101. In other words, during the time periods 200, 200a the connection between MS 100 and S-BS 101 still can be used.

After sending MOB_HO-IND which is an example for a Switch Indication message, the MS 100 keeps the connection with the S-BS 101 and does not switch to T-BS until the Connection Hold Timer 200 has been expired. During the timer period defined by the Connection Hold Time value 200, 200a the MS 100 and S-BS 101 still keep the connection with each other. After the Connection Hold Time expires, the MS 100 switches to the selected T-BS 102 and the S-BS 101 can stop sending of signals, packets or data to the MS 101 since the MS 100 may not listen anymore.

Both, the MS 100 as well as the S-BS 101 can calculate independently the Connection Hold Time value for the Connection Hold Timer 200. The Connection Hold Time value T_{new} may be calculated by subtracting the Handover Indication Readiness Timer 109 and the BS Switching Timer 111 from the ActionTime_a value such, that

T_{new} ≤ ActionTime_a - Handover Indication Readiness Timer 109 - BS Switching Timer 111.

T_{new} is the upper limit for the Connection Hold Time 200. The MS 100 may select an appropriate lower value. By modifying the formula for T_{new}, lower values for T_{new} may be calculated.

Instead of calculating the Connection Hold Time value for the Connection Hold Timer 200, 200a simultaneously in the MS 100 and in the S-BS 101, the Connection Hold Time value may only be calculated in the MS 100 and after expiring of the Connection Hold Timer 200 in the MS 100 a Switch Indication message S200 can be sent to the S-BS 101. The MS 100 indicates with the Switch Indication message to the S-BS 101 that the MS 100 from the time of sending the Switch Indication message on starts to switch to T-BS and may not listen to a connection from the S-BS. Therefore, from the time of receiving the Switch Indication message the S-BS 102 may stop sending any data in the direction to the MS 100.

In step S104' the MS 100 may also receive an enable signal from the S-BS 101, which enable signal may indicate the MS 100 that the S-BS 102 will expect to receive the Switch Indication message. Therefore, the S-BS 101 does not calculate a timer 200a.

After sending the MOB_HO-IND message in step S106' the MS 100 keeps an existing connection with the S-BS 101 and does not switch to the T-BS 102, until the connection Hold Timer 200 expires. During this hold time period 200, the MS 100 and S-BS 101 still keep a connection with each other.

As soon as the timer 200 expires, the MS 100 sends in step S200 a Switch Indication message, e.g. a MOB_HO-IND message, a further MOB_HO-IND message or a modified MOB -HO-IND message, to the S-BS 101. Sending this Switch Indication message may indicate to the S-BS 101 that the MS 100 will move to the T-BS 102 and the S-BS 101 can or shall stop sending packets to the MS 100.

When the S-BS 101 receives the Switch Indication message, the S-BS 101 immediately stops sending of any packets to the MS 100.

After expiring of timer 200 the BS Switching Timer 111 starts. Compared with Fig. 1, the order of Handover Indication Readiness Timer 111, time interval 200 and BS Switching Timer 111 may be changed.

Time interval T_{new} 200 is not a Buffer time generating a dead time, as interval 114 may be.

Only the MS 100 calculates the Connection Hold Time, value T_{new}. In the case that only the MS 100 calculates the Connection Hold Timer the S-BS 101 receives a signal, the MS 100 calculates the Connection Hold Time value for the Connection Hold Timer such, that the Connection Hold Time value

T_{new} ≤ ActionTime_a - Handover Indication Readiness Timer - BS Switching Timer - 1.

The timer T_{new} starts after sending MOB_HO-IND in step S106'. Since the signal is sent via the air interface 105, the time or the number of frames, which are used for sending the MOB_HO-IND message in step S200 is taken into consideration. The Connection Hold Time is calculated by subtracting the Handover Indication Readiness Timer value, the BS Switching Timer value and the value "1" from the ActionTime_a value.

Instead of reusing MOB_HO-IND a MS Switch Indication message, MOB_MSSwitch-IND can be used.

In table 1 a format for a MOB_MSSwitch-IND message is provided.

**Table 1**

| Syntax | | Size (bit) |
|---|---|---|
| MOB_MSSwitch-IND message format () { | | |
| | Manage message type | 8 |
| | MS Switch Flag | 8 |
| | reserved | |
| } | | |

For the MS Switch Indication message or the a MOB_MSSwitch-IND message, different formats may exist.

In an example, the MS Switch Indication message only comprises the management message type. Any of the reserved management message types can be used as a value for the message type.

In another example the MS Switch Indication message includes the management message type and MS Switch flag or MS Switch value. A MS Switch value or a MS Switch Flag set to the logic value of "1" indicates to the S-BS that the MS will switch to the T-BS.

Management message type and/or MS Switch Flag parameters have the Time-Length-Value Format (TLV).

The MOB_MSSwitch-IND message comprises two parameters or TLVs. The first parameter is a Manage message type value, which identifies the type of the message and furthermore the MOB_MSSwitch-IND message comprises the MS switch flag which is a flag or a signal upon receiving of which signal a Base Station, in particular a serving Base Station S-BS 101, is able to identify that the MS 100 is switching to the target Base Station 102. Furthermore, on receiving of the MS switch flag, in particular on receiving of the combination of a predefined manage message type and the MS switch flag the S-BS 101 stops sending packets to the MS 100. The size of the Manage message type and MS Switching Flag is 8 bit.

After sending the first MOB_HO-IND message in step S106' the MS 100 starts the timer T_{new} 200 and keeps the service connection with S-BS 101 until the timer T_{new} expires. After the timer T_{new}, which is calculated in frames, has been expired, the MS 100 sends in step S200 a second MOB_HO-IND signal, in particular a further MOB_HO-IND signal, in order to notify the S-BS 101 to stop sending of data to the MS 100. After step S200 the MS 100 starts switching to the T-BS 102.

Thus, if there is an ongoing service between MS 100 and T-BS 101 a service in step S106' may not have to be interrupted. Therefore, the service interruption time caused by handover may be reduced because the service interruption may be delayed until step S200, where either a Switch Indication message is sent from MS 100 to S-BS 101 or on both sides corresponding timer expire.

Thus, the service interruption time when a handover takes place may be reduced.

After sending of the MOB_HO-IND message the BS Switching Timer 111 is started. When the BS Switching Timer 111 expires the timer T55 is started and the MS 100 expects Fast Ranging IEs.

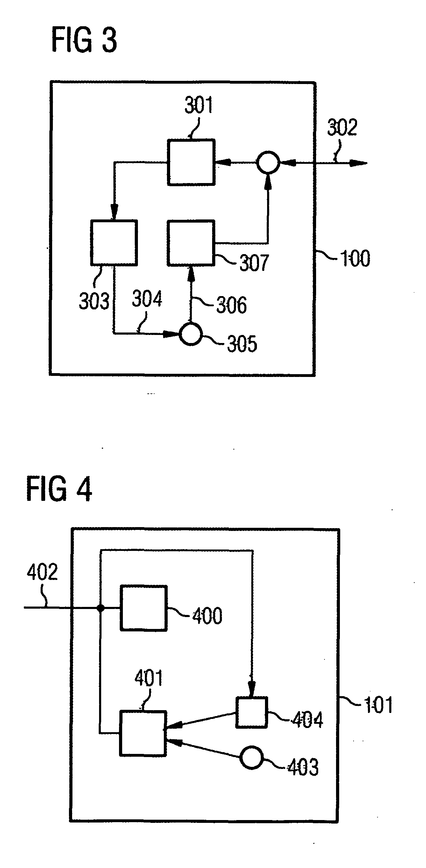

Fig. 3 shows a block diagram of a Mobile Station apparatus 100 according to an exemplary embodiment of the present invention.

The Mobile Station apparatus 100 comprises a Handover Message Receiving device 301. The Handover Message receiving device is connected to a bi-directional air interface 302, which can connect to an S-BS 101 (not shown in Fig. 1). The Handover Message Receiving device 301 is adapted to detect receiving of a Handover message from an S-BS 101. A Handover message detected by the Handover Message Receiving device 301 can be a MOB_BSHO-RSP message in a case where the MS 100 initiates the handover. Furthermore, in a case where the S-BS 101 initiates the Handover message, the detected message may be a Handover Request message, such as a MOB_B5HO-REQ.

Furthermore, the MS 100 comprises the Processing device 303. The processing device 303 takes the Handover message received by the Handover Receiving device, extracts values such as the ActionTime a and calculates the Connection Hold Time value for the Connection Hold Timer.

The Connection Hold Time value may provide the time, for which time the MS 100 stays online and keeps a connection with the S-BS 101.

The calculated Connection Hold Time value is provided via link 304 to the Timer device 305. In particular, the Timer device 305 is loaded with the Connection Hold Time value.

The Timer device 305 controls the Handover device 307 via connection 306. The Handover device 307 monitors an established connection between MS 100 and a S-BS 102. The connection, which may be monitored by the Handover device also is established via the air interface 302. The Handover device 307 is adapted to send a Handover Indication message and to start the timer device 305, which has been loaded with the Connection Hold Time value. After expiring of the timer device 305, i.e. after expiring of the Connection Hold Time value, the Handover device 307 starts handing over of a connection between the MS 100 and the S-BS 101 in order to start establishing a connection between MS 100 and T-BS 102.

Fig. 4 shows a block diagram of a Base Station apparatus 101 according to an exemplary embodiment of the present invention.

The Base Station apparatus 101 comprises a Handover Indication receiving device 400 and the connection device 401. The Handover Indication receiving device 400 is adapted to detect the receiving of a Handover Indication message. For example, the Handover Indication receiving device 400 is adapted to receive and to detect a MOB_HO-IND signal. The Connection device 401 is adapted to stop sending of signals via the air interface 402 when at least one trigger signal appears, wherein the trigger signal may be selected from the expiring of timer device 403 and the receiving of a Switch Indication message in the Switch Indication receiving device 404. A Switch Indication message may be a MS Switch Indication message or a Handover Indication message, e.g. MOB_HO-IND.

The processing device may be integrated in the timer device 403.

The Base Station apparatus 101 also comprise the Timer device 403 which can be loaded with a Connection Hold Time value and provides a trigger signal.

The Switch Indication Receiving device 404 and the Timer device 403 may be examples of how the Base Station can receive a trigger signal. In order to control the Base Station apparatus 101, the Timer device 403 and the Switch Indication, receiving device 404 are connected to the Connection device 401.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. A Mobile Station apparatus (100) for controlling a handover between a Serving Base Station apparatus (101) and a Target Base Station (102) apparatus, comprising:
a Handover Message Receiving device (301);
a Processing device (303);
a Handover device (307);
a Timer device (305);
wherein the Handover Message Receiving device (301) is adapted to detect receiving of a Handover message;
wherein the Processing device (303) is adapted upon detecting of the Handover message to calculate a Connection Hold Time value; wherein the Handover device (307) is adapted:
to send a Handover Indication message to the Serving Base Station apparatus (101);to start the Timer device (305) with the Connection Hold Time value; and to handover the connection from the Serving Base Station apparatus (101) to the Target Base Station (102) apparatus upon expiring of the Timer device.

2. The Mobile Station apparatus (100) of claim 1, wherein the Handover message is at least one Handover message of a Handover Response message (MOB_BSHO-RSP) and a Handover Request message (MOB_BSHO-REQ).

3. The Mobile Station apparatus (100) of claim 1, wherein the Connection Hold Time value is calculated substantially from an Action Time value, a Handover Indication Readiness Timer (109) value and a Base Station Switching Timer (111);
wherein the Handover Indication readiness timer value denotes the time the Mobile Station can transmit a Handover Indication message (MOB_HO-IND); and
wherein the Action Time value denotes the time after which the Serving Base Station (101) sends a handover message to the Mobile Station (100).

4. The Mobile Station apparatus (100) of one of claims 1 to 3, wherein the Handover device (307) is further adapted to send a Switch Indication message to the Serving Base Station (101) apparatus, indicating a handover of the Mobile Station apparatus (100) to the Target Base Station (102).

5. The Mobile Station apparatus (100) of claim 4, wherein the Switch Indication message is at least one message of a MS Switch Indication message (MOB_MSSwitch-IND) and a Handover Indication message (MOB_HO-IND).

6. The Mobile Station apparatus (100) of one of claims 4 to 5, wherein the Connection Hold Time value is reduced by a time value for sending the Switch Indication message.

7. The Mobile Station apparatus (100) of one of claims 4 or 6, wherein the Handover Message Receiving device (301) is further adapted to receive an enable signal,wherein the enable signal is adapted to enable in the Mobile Station apparatus (100) sending of the Switch Indication message.

8. The Mobile Station apparatus (100) of claim 7, wherein the Handover Message Receiving device (301) is adapted to receive the enable signal from the Serving Base Station apparatus (200).

9. The Mobile Station apparatus (100) of one of claims 1 to 8, wherein the Mobile Station apparatus (100) is a mobile station based on at least one of the WiMax^{™} standard and the IEEE 802.16e standard.

10. A Base Station apparatus (101, 102) for controlling a connection to a Mobile Station apparatus (100), comprising:
a Handover Indication Receiving device (400);
a Connection device (401);
a Timer device (403);
a Processing device;
wherein the Handover Indication Receiving device (400) is adapted to detect receiving of a Handover Indication message (MOB_HO-IND); wherein the Connection device (401) is adapted to maintain an established connection until a trigger signal appears and upon appearing of the trigger signal to stop sending of signals;
wherein the Processing device is adapted upon receiving of a Handover Indication message (MOB_HO-IND) to calculate a Connection Hold Time value; wherein the Connection device (401) is adapted to:
start the Timer device (403) with the Connection Hold Time value; sending the timer trigger signal upon expiring of the Timer device;
wherein the Processing device is further adapted to take into account during calculating of the Connection Hold Time value a propagation delay for a Handover Message (MOB_BSHO-RSP, MOB_MSHO-REQ) such that the Timer device is synchronous with the Timer device of a Mobile Station apparatus;
wherein the Connection Hold Time value is calculated substantially from an action time value, a Handover Indication readiness timer value and a Base Station switching timer value;
wherein the Action Time value denotes the time after which the Base Station (101) sends the handover message to the Mobile Station (100); and
wherein the Handover Indication readiness timer value denotes the time after which a Mobile Station (100) can transmit a Handover Indication message (MOB_HO-IND).

11. The Base Station apparatus (101, 102) of claim 10, wherein the trigger signal is at least one trigger signal of the group of trigger signals consisting of:
receiving a MS Switch Indication message (MOB_MSSwitch-IND) from a Mobile Station apparatus;
receiving a Handover Indication message (MOB_HO-IND)from a Mobile Station apparatus; and
receiving a timer trigger signal from the Base Station apparatus.

12. A Base Station apparatus (101, 102) of claim 10 or 11, wherein the Connection Hold Time value calculated in the Base Station apparatus is substantially equal to a Connection Hold Time value calculated in the Mobile Station apparatus.

13. The Base Station apparatus (101, 102) of one of claims 10 to 12, wherein the Connection device (401) is adapted to send an enable signal to a Mobile Station apparatus (100); wherein the enable signal is adapted to enable the sending of the Switch Indication message.

14. A method in a Mobile Station apparatus (100) for controlling a handover between a Serving Base Station (101) apparatus and a Target Base Station apparatus (102), comprising:
detecting receiving of a Handover message; calculating a Connection Hold Time value upon detecting receiving of the Handover message; sending a Handover Indication message to the Serving Base Station apparatus; starting a Timer device (305) with the Connection Hold Time value; and handing over the connection with the Serving Base Station (102) apparatus upon expiring of the Timer device (305).

## Patentansprüche

1. Mobilstationsgerät (100) zum Steuern einer Übergabe zwischen einem versorgenden Basisstationsgerät (101) und einem Zielbasisstations-(102)-Gerät, umfassend:
eine Übergabenachricht-Empfangsvorrichtung (301);
eine Verarbeitungsvorrichtung (303);
eine Übergabevorrichtung (307);
eine Zeitgebervorrichtung (305);
wobei die Übergabenachricht-Empfangsvorrichtung (301) angepasst ist, um Empfang einer Übergabenachricht zu detektieren;
wobei die Verarbeitungsvorrichtung (303) angepasst ist, um nach Detektieren der Übergabenachricht einen Verbindungshaltezeitwert zu berechnen; wobei die Übergabevorrichtung (307) angepasst ist:
zum Senden einer Übergabeanzeigenachricht an das versorgende Basisstationsgerät (101); zum Starten der Zeitgebervorrichtung (305) mit dem Verbindungshaltezeitwert; und zum Übergeben der Verbindung von dem versorgenden Basisstationsgerät (101) an das Zielbasisstations (102)-Gerät nach Ablauf der Zeitgebervorrichtung.

2. Mobilstationsgerät (100) nach Anspruch 1, wobei die Übergabenachricht mindestens eine Übergabenachricht einer Übergabeantwortnachricht (MOB_BSHO-RSP) und einer Übergabeanforderungsnachricht (MOB_BSHO-REQ) ist.

3. Mobilstationsgerät (100) nach Anspruch 1, wobei der Verbindungshaltezeitwert im Wesentlichen aus einem Vorgangszeitwert, einem Übergabeanzeige-Bereitschaftszeitgeber (109)-Wert und einem Basisstations-Umschaltzeitgeber (111) berechnet wird;
wobei der Übergabeanzeige-Bereitschaftszeitgeberwert die Zeit angibt, zu der die Mobilstation eine Übergabeanzeigenachricht (MOB HO-IND) übertragen kann; und
wobei der Vorgangszeitwert die Zeit angibt, nach der die versorgende Basisstation (101) eine Übergabenachricht an die Mobilstation (100) sendet.

4. Mobilstationsgerät (100) nach einem der Ansprüche 1 bis 3, wobei die Übergabevorrichtung (307) weiter angepasst ist, um eine Umschaltanzeigenachricht an das versorgende Basisstations (101)-Gerät zu senden, die eine Übergabe des Mobilstationsgeräts (100) an die Zielbasisstation (102) anzeigt.

5. Mobilstationsgerät (100) nach Anspruch 4, wobei die Umschaltanzeigenachricht mindestens eine Nachricht einer MS-Umschaltanzeigenachricht (MOB_MSSwitch-IND) und einer Übergabeanzeigenachricht (MOB_HO-IND) ist.

6. Mobilstationsgerät (100) nach einem der Ansprüche 4 bis 5, wobei der Verbindungshaltezeitwert um einen Zeitwert zum Senden der Umschaltanzeigenachricht reduziert wird.

7. Mobilstationsgerät (100) nach einem der Ansprüche 4 oder 6, wobei die Übergabenachricht-Empfangsvorrichtung (301) weiter angepasst ist, um ein Freigabesignal zu empfangen, wobei das Freigabesignal angepasst ist, um in dem Mobilstationsgerät (100) das Senden der Umschaltanzeigenachricht freizugeben.

8. Mobilstationsgerät (100) nach Anspruch 7, wobei die Übergabenachricht-Empfangsvorrichtung (301) angepasst ist, um das Freigabesignal von dem versorgenden Basisstationsgerät (200) zu empfangen.

9. Mobilstationsgerät (100) nach einem der Ansprüche 1 bis 8, wobei das Mobilstationsgerät (100) eine auf mindestens einem des Standards WiMax^{™} und des Standards IEEE 802.16e basierende Mobilstation ist.

10. Basisstationsgerät (101, 102) zum Steuern einer Verbindung zu einem Mobilstationsgerät (100), umfassend:
eine Übergabeanzeige-Empfangsvorrichtung (400);
eine Verbindungsvorrichtung (401);
eine Zeitgebervorrichtung (403);
eine Verarbeitungsvorrichtung;
wobei die Übergabeanzeige-Empfangsvorrichtung (400) angepasst ist, um Empfangen einer Übergabeanzeigenachricht (MOB_HO-IND) zu detektieren; wobei die Verbindungsvorrichtung (401) angepasst ist, um eine hergestellte Verbindung aufrechtzuerhalten, bis ein Auslösesignal erscheint, und um nach Erscheinen des Auslösesignals zu stoppen, Signale zu senden;
wobei die Verarbeitungsvorrichtung angepasst ist, um nach Empfangen einer Übergabeanzeigenachricht (MOB_HO-IND) einen Verbindungshaltezeitwert zu berechnen; wobei die Verbindungsvorrichtung (401) angepasst ist zum:
Starten der Zeitgebervorrichtung (403) mit dem Verbindungshaltezeitwert; Senden des Zeitgeberauslösesignals nach Ablauf der Zeitgebervorrichtung;
wobei die Verarbeitungsvorrichtung weiter angepasst ist, um während der Berechnung des Verbindungshaltezeitwerts eine Ausbreitungsverzögerung für eine Übergabenachricht (MOB_BSHO-RSP, MOB_MSHO-REQ) derart zu berücksichtigen, dass die Zeitgebervorrichtung mit der Zeitgebervorrichtung eines Mobilstationsgeräts synchron ist;
wobei der Verbindungshaltezeitwert im Wesentlichen aus einem Vorgangszeitwert, einem Übergabeanzeige-Bereitschaftszeitgeberwert und einem Basisstations-Umschaltzeitgeberwert berechnet wird;
wobei der Vorgangszeitwert die Zeit angibt, nach der die Basisstation (101) die Übergabenachricht an die Mobilstation (100) sendet; und
wobei der Übergabeanzeige-Bereitschaftszeitgeberwert die Zeit angibt, nach der eine Mobilstation (100) eine Übergabeanzeigenachricht (MOB_HO-IND) übertragen kann.

11. Basisstationsgerät (101, 102) nach Anspruch 10, wobei das Auslösesignal mindestens ein Auslösesignal der Gruppe von Auslösesignalen ist, bestehend aus:
Empfangen einer MS-Umschaltanzeigenachricht (MOB_MSSwitch-IND) von einem Mobilstationsgerät;
Empfangen einer Übergabeanzeigenachricht (MOB_HO-IND) von einem Mobilstationsgerät; und
Empfangen eines Zeitgeberauslösesignals von dem Basisstationsgerät.

12. Basisstationsgerät (101, 102) nach Anspruch 10 oder 11, wobei der in dem Basisstationsgerät berechnete Verbindungshaltezeitwert im Wesentlichen gleich einem in dem Mobilstationsgerät berechneten Verbindungshaltezeitwert ist.

13. Basisstationsgerät (101, 102) nach einem der Ansprüche 10 bis 12, wobei die Verbindungsvorrichtung (401) angepasst ist, um ein Freigabesignal an ein Mobilstationsgerät (100) zu senden;
wobei das Freigabesignal angepasst ist, um das Senden der Umschaltanzeigenachricht freizugeben.

14. Verfahren in einem Mobilstationsgerät (100) zum Steuern einer Übergabe zwischen einem versorgenden Basisstations (101)-Gerät und einem Zielbasisstationsgerät (102); umfassend:
Detektieren des Empfangens einer Übergabenachricht; Berechnen eines Verbindungshaltezeitwerts nach Detektieren des Empfangens der Übergabenachricht; Senden einer Übergabeanzeigenachricht an das versorgende Basisstationsgerät; Starten einer Zeitgebervorrichtung (305) mit dem Verbindungshaltezeitwert; und Übergeben der Verbindung mit dem versorgenden Basisstations (102)-Gerät nach Ablauf der Zeitgebervorrichtung (305).

## Revendications

1. Un appareil de station mobile (100) destiné à commander un transfert entre un appareil de station de base de desserte (101) et un appareil de station de base cible (102), comprenant:
un dispositif de réception de message de transfert (301),
un dispositif de traitement (303),
un dispositif de transfert (307),
un dispositif de minuterie (305),
dans lequel le dispositif de réception de message de transfert (301) est adapté de façon à détecter la réception d'un message de transfert,
dans lequel le dispositif de traitement (303) est adapté, à la détection du message de transfert, de façon à calculer une valeur de temps de maintien de connexion, dans lequel le dispositif de transfert (307) est adapté de façon:
à envoyer un message d'indication de transfert à l'appareil de station de base de desserte (101), à démarrer le dispositif de minuterie (305) avec la valeur de temps de maintien de connexion et à transférer la connexion de l'appareil de station de base de desserte (101) à l'appareil de station de base cible (102) à l'expiration du dispositif de minuterie.

2. L'appareil de station mobile (100) selon la revendication 1, dans lequel le message de transfert est au moins un message de transfert parmi un message de réponse de transfert (MOB BSHO-RSP) et un message de demande de transfert (MOB_BSHO-REQ).

3. L'appareil de station mobile (100) selon la revendication 1, dans lequel la valeur de temps de maintien de connexion est calculée essentiellement à partir d'une valeur de temps d'action, d'une valeur de minuterie de disponibilité d'indication de transfert (109) et d'une valeur de minuterie de commutation de station de base (111),
dans lequel la valeur de minuterie de disponibilité d'indication de transfert indique le moment où la station mobile peut transmettre un message d'indication de transfert (MOB_HO-IND), et
dans lequel la valeur de temps d'action indique le temps après lequel la station de base de desserte (101) envoie un message de transfert à la station mobile (100).

4. L'appareil de station mobile (100) selon l'une quelconque des revendications 1 à 3, dans lequel le dispositif de transfert (307) est adapté en outre de façon à envoyer un message d'indication de commutation à l'appareil de station de base de desserte (101) indiquant un transfert de l'appareil de station mobile (100) à la station de base cible (102).

5. L'appareil de station mobile (100) selon la revendication 4, dans lequel le message d'indication de commutation est au moins un message parmi un message d'indication de commutation MS (MOB_MSSwitch-IND) et un message d'indication de transfert (MOB_HO-IND).

6. L'appareil de station mobile (100) selon l'une quelconque des revendications 4 à 5, dans lequel la valeur de temps de maintien de connexion est diminuée d'une valeur temporelle pour l'envoi du message d'indication de commutation.

7. L'appareil de station mobile (100) selon l'une quelconque des revendications 4 ou 6, dans lequel le dispositif de réception de message de transfert (301) est adapté en outre de façon à recevoir un signal d'activation, dans lequel le signal d'activation est adapté de façon à activer dans l'appareil de station mobile (100) l'envoi du message d'indication de commutation.

8. L'appareil de station mobile (100) selon la revendication 7, dans lequel le dispositif de réception de message de transfert (301) est adapté de façon à recevoir le signal d'activation de l'appareil de station de base de desserte (200).

9. L'appareil de station mobile (100) selon l'une quelconque des revendications 1 à 8, dans lequel l'appareil de station mobile (100) est une station mobile basée sur au moins une norme parmi la norme WiMax^{™} et la norme IEEE 802.16e.

10. Un appareil de station de base (101, 102) destiné à commander une connexion à un appareil de station mobile (100), comprenant:
un dispositif de réception d'indication de transfert (400),
un dispositif de connexion (401),
un dispositif de minuterie (403),
un dispositif de traitement,
dans lequel le dispositif de réception d'indication de transfert (400) est adapté de façon à détecter la réception d'un message d'indication de transfert (MOB_HO-IND), dans lequel le dispositif de connexion (401) est adapté de façon à maintenir une connexion établie jusqu'à ce qu'un signal déclencheur apparaisse et, à l'apparition du signal déclencheur, de façon à arrêter l'envoi de signaux,
dans lequel le dispositif de traitement est adapté, à la réception d'un message d'indication de transfert (MOB HO-IND), de façon à calculer une valeur de temps de maintien de connexion, dans lequel le dispositif de connexion (401) est adapté de façon:
à démarrer le dispositif de minuterie (403) avec la valeur de temps de maintien de connexion, à envoyer le signal déclencheur de minuterie à l'expiration du dispositif de minuterie.
dans lequel le dispositif de traitement est adapté en outre de façon à prendre en compte, au cours du calcul de la valeur de temps de maintien de connexion, un délai de propagation pour un message de transfert (MOB_BSHO-RSP, MOB_MSHO-REQ), de sorte que le dispositif de minuterie soit synchrone avec le dispositif de minuterie d'un appareil de station mobile,
dans lequel la valeur de temps de maintien de connexion est calculée essentiellement à partir d'une valeur de temps d'action, d'une valeur de minuterie de disponibilité d'indication de transfert et d'une valeur de minuterie de commutation de station de base,
dans lequel la valeur de temps d'action indique le temps après lequel la station de base de desserte (101) envoie le message de transfert à la station mobile (100), et
dans lequel la valeur de minuterie de disponibilité d'indication de transfert indique le temps après lequel une station mobile (100) peut transmettre un message d'indication de transfert (MOB_HO-IND).

11. L'appareil de station de base (101, 102) selon la revendication 10, dans lequel le signal déclencheur est au moins un signal déclencheur du groupe de signaux déclencheurs se composant de :
la réception d'un message d'indication de commutation MS (MOB MSSwitch-IND) à partir d'un appareil de station mobile,
la réception d'un message d'indication de transfert (MOB HO-IND) à partir d'un appareil de station mobile, et
la réception d'un signal déclencheur de minuterie à partir de l'appareil de station de base.

12. Un appareil de station de base (101, 102) selon la revendication 10 ou 11, dans lequel la valeur de temps de maintien de connexion calculée dans l'appareil de station de base est essentiellement égale à la valeur de temps de maintien de connexion calculée dans l'appareil de station mobile.

13. L'appareil de station de base (101, 102) selon l'une quelconque des revendications 1 0 à 1 2 , dans lequel le dispositif de connexion (401) est adapté de façon à envoyer un signal d'activation à un appareil de station mobile (100),
dans lequel le signal d'activation est adapté de façon à activer l'envoi du message d'indication de commutation.

14. Un procédé dans un appareil de station mobile (100) destiné à commander un transfert entre un appareil de station de base de desserte (101) et un appareil de station de base cible (102), comprenant :
la détection de la réception d'un message de transfert, le calcul d'une valeur de temps de maintien de connexion à la détection de la réception du message de transfert, l'envoi d'un message d'indication de transfert à l'appareil de station de base de desserte, le démarrage d'un dispositif de minuterie (305) avec la valeur de temps de maintien de connexion et le transfert de la connexion à l'appareil de station de base de desserte (102) à l'expiration du dispositif de minuterie (305).
